# EUROPEAN PATENT APPLICATION

(11) **EP 0 991 217 A2**
(43) Date of publication of application: **05.04.2000**
(21) Application number: 99307462.4
(22) Date of filing: 21.09.1999
(51) Int. Cl.: H04J 14/02, H04B 10/145, H04B 10/207

(54) **Low cost WDM system**

(30) Priority: 02.10.1998 US 165775
(71) Applicant: LUCENT TECHNOLOGIES INC., Murray Hill, New Jersey 07974-0636 (US)
(72) Inventor: Dudley, Thomas Joseph, Sinking Spring, Pennsylvania 19608 (US)
(74) Representative: Johnston, Kenneth Graham

(57) **Abstract**

The invention is a low cost Wavelength Division Multiplexing (WDM) system with a wide spacing for the component wavelengths. The system can employ uncooled lasers (11...11ₙ) as the light sources, and may also employ more inexpensive polymer multiplexers/ demultiplexers (13,15). The wavelengths may also be allowed to drift, thus eliminating the need for passive gratings.

## Description

### Field of the Invention

This invention relates to Wavelength Division Multiplexing (WDM) systems.

### Background of the Invention

Wavelength division multiplexing, where several wavelengths of light are carried by a single optical fiber, has achieved prominence as a technique for transmitting vast amounts of data at high speeds. A typical WDM system employs a plurality of lasers with a 0.8 nm spacing, a plurality of silicon multiplexer/ demultiplexer components, and passive fiber gratings for locking the laser wavelengths. Such systems are useful for optical transmission in general.

In some systems, such as Fiber-To-The-Home and multi-protocol transport in WAN/MAN (Wide Area Network/Metropolitan Area Network), it is desired to provide a more cost-effective approach to wavelength division multiplexing.

### Summary of the Invention

The invention is a wavelength division multiplexing system which includes a plurality of lasers, each emitting light at a different wavelength, where the wavelengths are separated by at least 20 nm. Optically coupled to the lasers is an optical combiner which combines the light from the lasers. Optically coupled to the combiner is an optical fiber which transports the combined light.

### Brief Description of the Figures

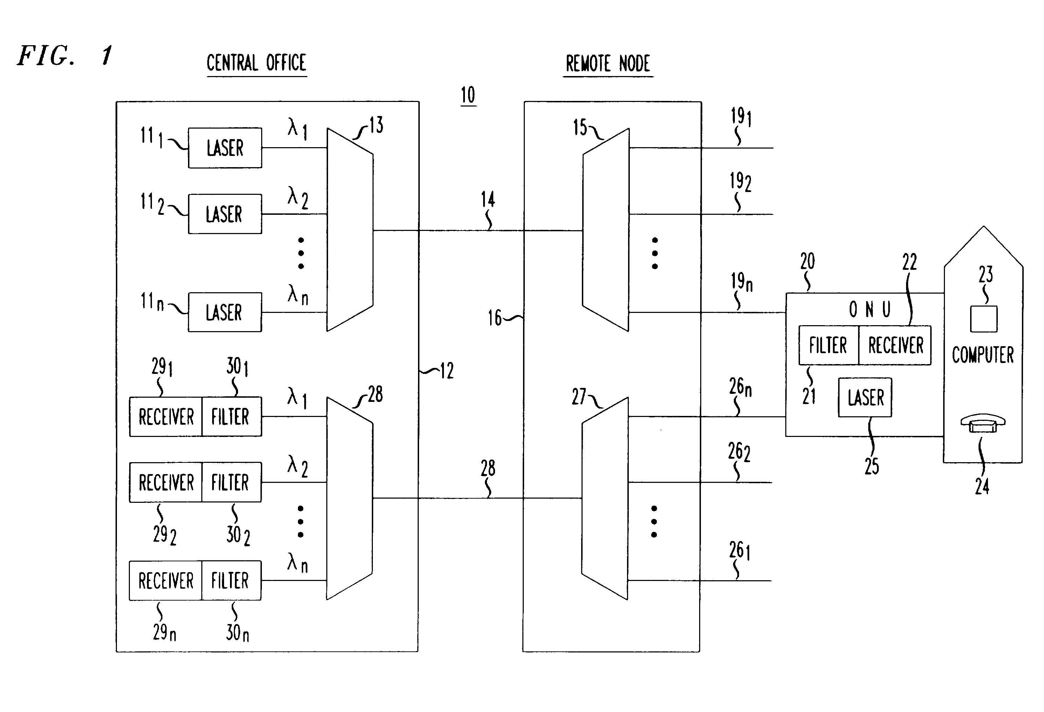

These and other features of the invention are delineated in detail in the following description. In the drawing:

The Figure is a schematic illustration of a wavelength division multiplexed system employing features of the invention in accordance with one embodiment.

### Detailed Description

The figure illustrates a fiber-to-the-home system, 10, which incorporates features of the invention. A plurality of lasers, 11₁, 11₂,...11ₙ are employed in a central office, 12. Each laser emits light of a different wavelength, λ₁, λ₂, ...λₙ. Each laser can be, for example, a standard distributed feedback (DFB) laser which is well known in the art. The devices are chosen so that the wavelength of the main mode of each device is at least 20nm, and preferably 25nm, from the closest wavelength of another device, e.g., λ₂ - λ₁ = 25 nm. Since each wavelength represents a different channel, the channels are at least 20nm, and preferably 25 nm apart. Such channel spacing permits uncooled lasers to be used rather than more expensive cooled lasers. In one particular example, the system could have 16 channels with wavelengths ranging from 1250 nm to 1625 nm and adjacent channels separated by 25 nm.

The lasers are optically coupled to an optical combiner, such as a multiplexer, 13, which combines all the wavelengths for transmission. (It should be understood that in this application, an optical combiner is meant to include any device which combines optical signals from a plurality of inputs onto at least one output. A multiplexer is considered a special class of combiner, since it combines signals of different wavelengths from a plurality of inputs onto one output.) Multiplexers made in silicon substrates are employed in most WDM systems. However, in the present system, less costly multiplexers made in a polymer substrate may be employed due to the large channel spacing.

The combined light is transmitted over an optical fiber, 14, to one of several remote nodes, 16. In particular, the fiber, 14, is coupled to an optical splitter, 15, which may also be made of a polymer rather than silicon for cost savings. (An "optical splitter" is intended to include any device which splits an optical input signal into a plurality of output signals. A demultiplexer is considered a special case of optical splitter since it splits input light of many wavelengths onto a plurality of outputs, with each output carrying a different wavelength An "optical coupler" is a device which puts all wavelengths at the input onto all outputs.) While a demultiplexer could be used in the invention, a less costly system is produced where a coupler is used which couples all wavelengths from fiber 14 onto each of the output fibers 19₁ to 19ₙ. For example, transmission of all wavelengths is broadest over a fiber, 19ₙ to an optical network unit (ONU), 20, located on the side of a subscriber's house. The ONU includes a receiver, 22, for converting the optical signal to an electrical signal. The optical signal carried on fiber 19ₙ is coupled onto a wide pass band filter, 21, which is an integral part of the receiver so that undesired wavelengths can be filtered out. The receiver, 22, is electrically coupled to a computer, 23, and a phone unit, 24.

In the reverse direction, a laser, e.g., 25, at each subscriber location could transmit a signal at a characteristic wavelength, λ₂ₙ₊₁, back to the remote node, 16, over a fiber, 26. Typically, the return wavelength will be the same as that subscriber's received wavelength after filtering. The return signals are optically coupled to a combiner, 27, which combines the return signals and transmits the resulting multiplexed signals over a fiber, 28, to the central office, 12. The fiber, 28, is coupled to a splitter, 28, which couples the combined signals to receivers, 29₁, 29₂...29ₙ including filters 30₁...30ₙ, respectively, where the optical signals are converted to electrical signals.

Again, the system can be made less costly by using a coupler, 28, rather than a demultiplexer to couple all wavelengths to each receiver, 29₁...29ₙ, and then filtering out unwanted wavelengths at the receivers. Further, polymer rather than silicon can be used for the coupler as before. The channel spacing proposed here would be particularly compatible with the recently announced Allwave ^{™} fiber which eliminates absorption due to moisture for certain frequencies. Further, since the wavelengths could be allowed to drift, the system need not include passive gratings external to the lasers for tightly controlling the wavelengths of the lasers.

While the invention has been described with reference to a broadband access system, it should be apparent that it may be employed with other systems. For example, a WAN/MAN (wide area network/metropolitan network) system employs multiple protocols such as Ethernet, Asynchronous Transfer Mode (ATM), and Fiber Distributed Data Interface (FDDI). In such a system, the different protocols could be carried on different channels in the low cost WDM system described herein.

## Claims

1. A wavelength division multiplexing system comprising:
a plurality of lasers (11 ... 11ₙ) emitting light at different wavelengths (λ₁...λₙ),
an optical combiner (13) optically coupled to the lasers; and
an optical fiber (14) optically coupled to the combiner
CHARACTERIZED IN THAT
the wavelengths are separated by at least 20 nm.

2. The system according to claim 1 wherein the lasers are uncooled.

3. The system according to claim 1 wherein the combiner comprises a polymer material.

4. The system according to claim 1 wherein the wavelengths range from 1250 nm to 1625 nm, and/or are separated by at least 25 nm.

5. The system according to claim 1 wherein the system is either a broadband access system and each channel of the system is carried by a different wavelength, or the system is a Wide Area Network system, and each protocol is carried by a different wavelength.

6. The system according to claim 1 wherein the lasers are coupled to the combiners without passive gratings.

7. The system according to claim 1 wherein the combiner is a wavelength division multiplexer.

8. The system according to claim 1 further comprising an optical splitter (15) coupled to the fiber.

9. The system according to claim 8, wherein the splitter is either an optical coupler with an input coupled to the fiber and plurality of outputs each adapted to transmit a plurality of the wavelengths, or a demultiplexer.

10. The system according to claim 8 or 9, wherein the splitter comprises a polymer material.
